# EUROPÄISCHE PATENTSCHRIFT

(11) **EP 3 228 980 B1**
(45) Veröffentlichungstag und Bekanntmachung des Hinweises auf die Patenterteilung: **03.10.2018**
(21) Anmeldenummer: 16164385.3
(22) Anmeldetag: 08.04.2016
(51) Int. Cl.: G01B 21/08, G01B 11/06

(54) **SCHICHTDICKENMESSUNG VON ERDABDECKUNGEN**
OVERBURDEN THICKNESS MEASUREMENT
MESURE DE L'EPAISSEUR DE LA MATIERE DE COUVERTURE

(43) Veröffentlichungstag der Anmeldung: 11.10.2017
(73) Patentinhaber: Siemens Aktiengesellschaft, 80333 München (DE)
(72) Erfinder: Birchbauer, Josef Alois, 8054 Seiersberg (AT); Hatzl, Jürgen, 7423 Grafenschachen (AT); Hornacek, Michael, 1060 Wien (AT); Wakolbinger, Stefan, 8010 Graz (AT); Hödlmoser, Michael, 1180 Wien (AT); Windisch, Claudia, 8565 St. Johann (AT)
(74) Vertreter: Maier, Daniel Oliver

(56) Entgegenhaltungen:
- EP-A1- 2 647 951
- WO-A1-2016/045236
- MARK SMITH: "WHAT LIES BENEATH - Locating and managing the infrastructure that resides underground", RIGHT OF WAY, 1. August 2014 (2014-08-01), Seiten 24-28, XP002757901, Gefunden im Internet: URL:https://www.irwaonline.org/eweb/upload /web_julyaug_14_WhatLiesBeneath.pdf [gefunden am 2016-05-20]
- "Unmanned Aircraft Sensors and the Importance of "Ground-Truthing"", Geospatial Corporation , 28. Mai 2014 (2014-05-28), XP002757902, Gefunden im Internet: URL:https://www.geounderground.com/article /unmanned-aircraft-ground-truth [gefunden am 2016-05-20]

## Beschreibung

Die Erfindung betrifft ein Verfahren zur Schichtdickenmessung von Erdabdeckungen, insbesondere bei unterirdisch verlegten Gas- und Ölpipelines.

Unterirdisch verlegte Gas und Öl-Pipelines müssen nach gesetzlichen Vorgaben von einer Mindestschichtdicke an Erdreich bedeckt sein. Dem Leitungsbetreiber obliegt es dabei, die Einhaltung dieser Schichtdicken in periodischen

Abständen zu überprüfen und Veränderungen bei der Überdeckung festzustellen. Dabei wird typisch eine Messgenauigkeit von etwa 10 cm erwartet.

Derzeit ist es üblich, den Leitungsverlauf mittels Helikopter aus der Luft zu inspizieren und bei optisch-visuellen Verdachtsmomenten lokal mit einer händischen Messung der Schichtdicken am Boden zu validieren.

Dies stellt jedoch keine zeitlich durchgängige Messung in hoher Befliegungsfrequenz dar, da die verhältnismäßig kostspielige Befliegung mittels Helikoptern üblicherweise nur alle 2-4 Wochen, oder sogar nur quartalsweise erfolgt.

Außerdem kann es durch Bodenerosion zu einer kontinuierlichen Abtragung der Erdabdeckung kommen, sodass die vorgegebenen Schichtdicken unterschritten werden, ohne dass signifikante optische Veränderungen auftreten. Die Schichtdicke muss daher in regelmäßigen Abständen auch durch Begehung und händische Messung überprüft werden.

Aus der WO 2016/045236 A1 ist ein Verfahren zur Schichtdickenmessung von Erdabdeckungen bei einer unterirdisch verlegten Pipeline bekannt, wobei mit einem Detektor ein über der Pipeline angeordnetes Identifikationsband detektiert wird.

Der Erfindung liegt daher die Aufgabe zugrunde, ein Verfahren anzugeben, mit dem die Überwachung der Schichtdicke vereinfacht werden kann.

Erfindungsgemäß geschieht dies mit einem Verfahren gemäß Anspruch 1.

Vorteilhafte Ausgestaltungen ergeben sich aus den abhängigen Ansprüchen.

Die Erfindung wird anhand einer Figur näher erläutert, welche beispielhaft den erfindungsgemäßen Einsatz eines unbemannten Flugobjektes zeigt.

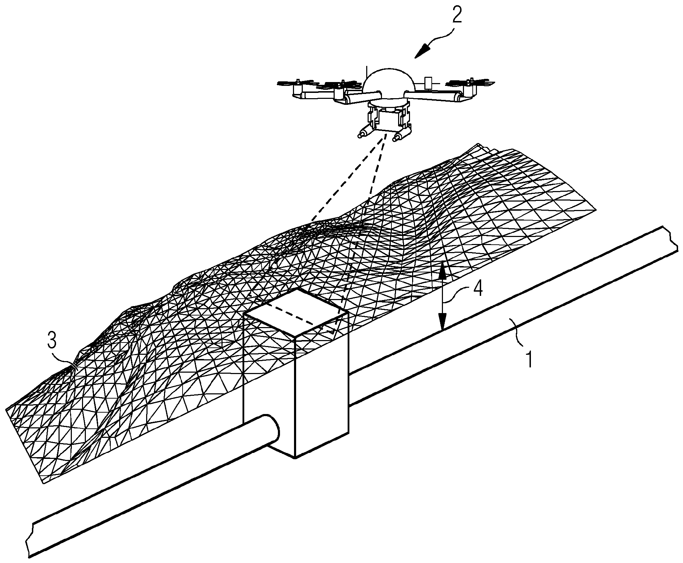

Die Darstellung nach Figur 1 umfasst eine im Boden verlegte und mit Erde bedeckte Rohrleitung 1, wobei die Schichtdicke 4 der Erdabdeckung vorgegebene Mindestwerte aufweisen muss.
Die Position und der Verlauf der Rohrleitung 1 wird vorzugsweise während des Verlegevorgangs exakt bestimmt und gespeichert. Dabei ist vor allem die Rohroberkante von Bedeutung, sie wird im Allgemeinen in Katastergenauigkeit d.h. mit tolerierten Abweichungen im unteren einstelligen cm-Bereich gemessen. Zwischen den einzelnen Messpunkten kann (linear) interpoliert werden, um so zu einem durchgängigen Pipelineverlauf ("Pipelinelinienzug") zu gelangen. Diese Vermessung kann gegebenenfalls mittels unbemannten Flugobjekten mit geeigneten Messsystemen erfolgen.

Es ist aber auch denkbar, die Position bzw. den Verlauf der Rohrleitung 1 nachträglich im vergrabenen Zustand mit geeigneten Messverfahren zu bestimmen.
Dies kann beispielsweise mit sogenannten Messmolchen mit inertialen Messsystemen geschehen, die in das Rohr eingebracht werden. Eine andere Möglichkeit ist die Vermessung mittels Radartechnologie.
Mit unbemannten Flugobjekten wird daraufhin ein digitales Geländemodell 3 d.h. eine digitale, numerische Speicherung der Höheninformationen der Landschaft über und um die Rohrleitung 1 erstellt.

Dies kann beispielsweise mittels Photogrammetrie erfolgen, bei der das betreffende Gelände während des Überfluges mittels Messbildkameras aus verschiedenen Positionen fotografiert wird. Aus den sich überlappenden Aufnahmen der Messbildkameras wird in der Folge ein digitales Geländemodell 3 erzeugt, welches gemeinsam mit den Daten des Rohrleitungsverlaufes zur Bestimmung der Schichtdicke der Erdabdeckung 4herangezogen wird.

Neben Kameras, die in unterschiedlichen Spektralbereichen arbeiten, können die unbemannten Flugobjekte auch beispielsweise Radar- oder Lasermesssysteme aufweisen.

Darüber hinaus ist eine exakte Positionsbestimmung des unbemannten Flugobjektes während des Überflugs und der fotografischen Aufnahmen bzw. Messvorgänge notwendig.

Dafür bieten sich insbesondere globale Satellitennavigationssysteme an, deren Genauigkeit durch stationäre Empfangsstationen, welche Korrektursignale an die Nutzer übermitteln, verbessert werden kann.

Als Alternative zu Satellitennavigationssystemen ist eine Positionsbestimmung mittels Magnetometer, Gyrosensoren sowie barometrischer Sensoren denkbar.

Beim Überflug mittels unbemanntem Flugobjekt 2 ist es zweckmäßig, in der Flugsteuerung den bekannten Verlauf der Pipeline bereits zu berücksichtigen, d.h. Wegpunkte der Befliegung automatisch aus dem Pipelinelinienzug abzuleiten. So kann etwa das Flugobjekt 2 eine konstante Höhe über der Pipeline halten und somit auf Höhenänderungen in der Geländetopographie implizit reagieren.

Während für die reine Flugsteuerung die übliche Genauigkeit eines GPS-Systems ausreicht, ist für die Erzeugung des digitalen Geländemodells 3 aus den Fotografien des unbemannten Flugobjektes 2 eine exakte Positionsbestimmung erforderlich, wie sie beispielsweise mittels Echtzeitkinematik (Real Time Kinematic, RTK) oder Differential Global Positioning System (DGPS) erfolgen kann. Diese Positionsbestimmung muss nicht für jede Fotografie vorliegen, es ist ausreichend, wenn mit einzelnen exakten Positionen die absolute Lage des Geländemodells und seine absoluten Abmessungen festgelegt werden können.

Als Echtzeitkinematik wird eine spezielle Variante des Differential-GPS bezeichnet, welche nicht die GPS-Nachrichten, sondern die Trägerfrequenz des Signals zur Synchronisierung nutzt. Da aber die Trägerfrequenz wesentlich höher als die Nachrichtenfrequenz ist, sind die mit Echtzeitkinematik erzielbaren Genauigkeiten auch wesentlich höher als bei herkömmlichen Differential-GPS-verfahren und liegen im Bereich weniger cm.

Die Erzeugung eines 3D Modelles des Geländes kann mittels photogrammetrischer Verfahren und dem Einsatz von Messbildkameras, d.h. Kameras mit geringen Abbildungsfehlern erfolgen.

Alternativ können aber auch Verfahren wie beispielsweise die Laseraltimetrie (Airborne Laserscanning) zum Einsatz kommen.

Laserscanning (auch LiDAR = Light Detection And Ranging genannt) ist eine Methode der Fernerkundung, bei der mittels Laserstrahl die Erdoberfläche abgetastet und die Distanz zwischen dem erfassten Punkt auf der Erdoberfläche und dem Sensor erfasst wird.

Wenn sich die Scaneinheit auf einem Flugobjekt 2 befindet, spricht man von Airborne Laser Scanning.

Die Vorteile des Laserscannings liegen vor allem in der erzielbaren hohen Messpunktedichte und Messgenauigkeit, sowie in der Möglichkeit Vegetation zu durchdringen.

Das Verfahren bildet damit eine ausgezeichnete Grundlage für die Erstellung eines digitalen Geländemodells, das im Gegensatz zu einem digitalen Oberflächenmodell die Erdoberfläche ohne Gebäude oder Bewuchs darstellt.

Als aktive Systeme sind Laser Scanner nicht auf das Sonnenlicht angewiesen, sondern können auch nachts eingesetzt werden, um Daten zu erfassen.

Airborne-Laserscanner für Landaufnahmen arbeiten typisch mit Wellenlängen zwischen 800 und 1550 Nanometer (Infrarot), deren Spektralweite bei 0,1 bis 0,5 Nanometer liegt.

Es kann zweckmäßig sein, die Wellenlänge des verwendeten Lasers an das Einsatzgebiet anzupassen, da die Art, wie ein Objekt die Laserstrahlen reflektiert bzw. absorbiert, abhängig von der Wellenlänge ist. So absorbieren beispielsweise Wasserflächen Licht im sichtbaren Bereich sehr stark, sodass die Verwendung eines Lasers mit einer Wellenlänge im sichtbaren Bereich die Auswertung erschwert.

Bei der eigentlichen Schichtdickebestimmung wird der Abstand von der Oberkante der Rohrleitung 1 zum jeweils vertikal darüber liegenden Punkt des Geländemodell 3 ermittelt, d.h. die Höhe von Punkten auf dem Pipelinelinienzug mit der Höhe bei der dem jeweiligen Punkten entsprechenden geographischen Breite und Länge am Geländemodell 3 verglichen.

Bei Hanglagen der Rohrleitung 1 kann es auch zweckmäßig sein, nicht nur den Abstand zwischen Rohroberkante und dem lotrecht darüber liegenden Punkt des Geländemodells 3 zu ermitteln, sondern den kürzesten Abstand zwischen einem Punkt auf dem Umfang der Rohrleitung 1 und der Schnittmenge des Geländemodells 3 mit einer vorzugsweise senkrecht zur Rohrachse angeordneten Schnittebene. Damit könne auch seitliche Unterschreitungen der vorgegebenen Schichtdicke festgestellt werden.

Beim Ausführungsbeispiel wird zur Vermessung des Geländeverlaufes ein unbemanntes Flugobjekt 2 eingesetzt, welches in Bezug auf die Verfügbarkeit und die Effizienz des Einsatzes besonders zweckmäßig ist. Grundsätzlich ist die Erfindung aber nicht darauf beschränkt sondern mit beliebigen bemannten und unbemannten Fahrzeugen einsetzbar, sofern diese in der Lage sind, die Messeinrichtungen aufzunehmen.

Denkbar wäre überdies auch der Einsatz stationärer Messeinrichtungen.

Es ist vorteilhaft, wenn das erfindungsgemäße Verfahren mit dem Überwachungs- und Steuerungssystem der Pipeline (SCADA) abgestimmt wird. So kann beispielsweise ein Fehlerhinweis des Steuerungssystemes einen Einsatz zur Schichtdickenmessung in einem bestimmten Bereich der Pipeline auslösen und die Ergebnisse der Messungen können durch das Überwachungs- und Steuerungssystem optisch dargestellt werden.

Die Erfindung kann nicht nur vorteilhaft zur Schichtdickenmessung von Erdabdeckungen bei unterirdisch verlegten Gas- und Ölpipelines, sondern beispielsweise auch bei Wasser-, Strom- und sonstigen Leitungen oder Einrichtungen eingesetzt werden.

### Bezugszeichenliste:

- 1: Rohrleitung
- 2: unbemanntes Flugobjekt
- 3: digitales Geländemodell
- 4: Schichtdicke der Erdabdeckung

## Patentansprüche

1. Verfahren zur Schichtdickenmessung von Erdabdeckungen, insbesondere bei unterirdisch verlegten Gas- und Ölpipelines, **dadurch gekennzeichnet, dass** die zu bedeckende Einrichtung (1) vermessen und ihre Koordinaten festgehalten werden, dass nach dem Auftragen der Erdabdeckung der Geländeverlauf über der Einrichtung vermessen und daraus ein Geländemodell (3) bestimmt und in einem vorgegebenen Koordinatensystem festgehalten wird und dass aus den Koordinaten der Einrichtung (1) und dem Geländemodell (3) die Schichtdicke der Erdabdeckung (4)bestimmt wird.

2. Verfahren nach Anspruch 1, **dadurch gekennzeichnet, dass** die Vermessung des Geländeverlaufs über der Einrichtung mittels Flugobjekten (2) erfolgt.

3. Verfahren nach Anspruch 2, **dadurch gekennzeichnet, dass** zur Messung des Geländeverlaufes das betreffende Gelände überflogen und fotografiert wird, dass die Position der Flugobjekte (2) mittels satellitengestützter Positionsbestimmungssysteme bestimmt wird und aus den sich überlappenden Fotografien und der jeweils zugeordneten Position der Flugobjekte (2) ein digitales Geländemodell (3) erzeugt wird.

4. Verfahren nach Anspruch 2, **dadurch gekennzeichnet, dass** zur Messung des Geländeverlaufes das betreffende Gelände überflogen und mittels Laserstrahl die Erdoberfläche abgetastet und die Distanz zwischen dem erfassten Punkt auf der Erdoberfläche und dem Flugobjekt (2) erfasst wird, dass die Position der Flugobjekte (2) mittels satellitengestützter Positionsbestimmungssysteme bestimmt wird und aus der Distanz zwischen dem erfassten Punkt auf der Erdoberfläche und dem Flugobjekt (2) und der jeweils zugeordneten Position der Flugobjekte (2) ein digitales Geländemodell (3) erzeugt wird.

5. Verfahren nach einem der Ansprüche 1 bis 4, **dadurch gekennzeichnet, dass** als Flugobjekt(2) ein unbemanntes Flugobjekt vorgesehen ist.

6. Verfahren nach Anspruch 5, **dadurch gekennzeichnet, dass** zur Steuerung des unbemannten Flugobjektes (2) Daten aus dem Überwachungs- und Steuerungssystem der Einrichtung herangezogen werden.

7. Verfahren nach einem der Ansprüche 1 bis 6, **dadurch gekennzeichnet, dass** das Ergebnis der Bestimmung der Schichtdicke der Erdabdeckung (4) mit dem Überwachungs- und Steuerungssystem der Einrichtung dargestellt wird.

## Claims

1. Method for overburden thickness measurement, in particular in the case of gas and oil pipelines laid underground, **characterised in that** the device (1) to be covered is measured and its coordinates are recorded, that after the overburden has been applied the terrain profile over the device is measured and a terrain model (3) is determined therefrom and recorded in a specified coordinate system, and that the thickness of the overburden (4) is determined from the coordinates of the device (1) and from the terrain model (3).

2. Method according to claim 1, **characterised in that** the measurement of the terrain profile over the device is performed by means of flying objects (2).

3. Method according to claim 2, **characterised in that** to measure the terrain profile the terrain in question is overflown and photographed, that the position of the flying objects (2) is determined by means of satellite-aided positioning systems, and a digital terrain model (3) is generated from the overlapping photographs and the respectively associated position of the flying objects (2).

4. Method according to claim 2, **characterised in that** to measure the terrain profile the terrain in question is overflown and the surface is scanned with a laser beam and the distance between the detected point on the earth's surface and the flying object (2) is detected, that the position of the flying objects (2) is determined by means of satellite-aided positioning systems and a digital terrain model (3) is generated from the distance between the detected point on the earth's surface and the flying object (2) and the respectively associated position of the flying objects (2).

5. Method according to one of claims 1 to 4, **characterised in that** an unmanned flying object is provided as the flying object (2).

6. Method according to claim 5, **characterised in that** data from the monitoring and control system of the device is used to control the unmanned flying object (2).

7. Method according to one of claims 1 to 6, **characterised in that** the result of the determination of the thickness of the overburden (4) is represented using the monitoring and control system of the device.

## Revendications

1. Procédé de mesure d'épaisseur de couche de couvertures de terre, notamment pour des gazoducs et des oléoducs posés sous terre, **caractérisé en ce que** l'installation (1) à recouvrir fait l'objet d'un relevé et ses coordonnées sont stockées, **en ce que**, après le dépôt de la couverture de terre, le profil du terrain au-dessus de l'installation fait l'objet d'un relevé et un modèle de terrain (3) est déterminé à partir de ce profil et est stocké dans un système de coordonnées prédéfini, et **en ce que** l'épaisseur de couche de la couverture de terre (4) est déterminée à partir des coordonnées de l'installation (1) et du modèle de terrain (3).

2. Procédé selon la revendication 1, **caractérisé en ce que** le relevé du profil du terrain au-dessus de l'installation est effectué au moyen d'objets volants (2).

3. Procédé selon la revendication 2, **caractérisé en ce que**, pour mesurer le profil du terrain, le terrain concerné est survolé et photographié, **en ce que** la position des objets volants (2) est déterminée grâce à des systèmes de positionnement mondial par satellite et un modèle de terrain (3) numérique est produit à partir des photographies qui se chevauchent et de la position des objets volants (2) qui leur est respectivement associée.

4. Procédé selon la revendication 2, **caractérisé en ce que**, pour mesurer le profil du terrain, le terrain concerné est survolé et la surface terrestre est balayée par un rayon laser et la distance entre le point de la surface terrestre qui est détecté et l'objet volant (2) est enregistrée, **en ce que** la position des objets volants (2) est déterminée grâce à des systèmes de positionnement mondial par satellite et un modèle de terrain (3) numérique est produit à partir de la distance entre le point de la surface terrestre qui est détecté et l'objet volant (2) et de la position des objets volants (2) qui leur est respectivement associée.

5. Procédé selon l'une des revendications 1 à 4, **caractérisé en ce que** l'on prévoit, en tant qu'objet volant (2), un objet volant sans équipage.

6. Procédé selon la revendication 5, **caractérisé en ce que** des données provenant du système de surveillance et de commande de l'installation sont utilisées pour la commande de l'objet volant (2) sans équipage.

7. Procédé selon l'une des revendications 1 à 6, **caractérisé en ce que** le résultat de la détermination de l'épaisseur de couche de la couverture de terre (4) est représenté par le système de surveillance et de commande de l'installation.
